(19) Europäisches Patentamt / European Patent Office / Office européen des brevets

(11) EP 4 040 560 A1

(12) # EUROPEAN PATENT APPLICATION

published in accordance with Art. 153(4) EPC

(43) Date of publication:
**10.08.2022 Bulletin 2022/32**

(21) Application number: **21844944.5**

(22) Date of filing: **13.08.2021**

(51) International Patent Classification (IPC):
***H01M 10/0567*** *(2010.01)* ***H01M 10/0525*** *(2010.01)*

(52) Cooperative Patent Classification (CPC):
Y02E 60/10

(86) International application number:
**PCT/CN2021/112377**

(87) International publication number:
**WO 2022/116589 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2020 CN 202011395171**

(71) Applicant: **Tianjin EV Energies Co., Ltd.**
**Tianjin 300380 (CN)**

(72) Inventors:
- **CONG, Changjie**
  **Tianjin 300380 (CN)**
- **GUO, Chuntai**
  **Tianjin 300380 (CN)**
- **GAO, Xiuling**
  **Tianjin 300380 (CN)**
- **DONG, Jing**
  **Tianjin 300380 (CN)**
- **CHEN, Xianglan**
  **Tianjin 300380 (CN)**

(74) Representative: **Cabinet Beaumont**
**4, Place Robert Schuman**
**B.P. 1529**
**38025 Grenoble Cedex 1 (FR)**

(54) **ELECTROLYTE ADDITIVE, USE THEREOF AND NON-AQUEOUS ELECTROLYTE CONTAINING ADDITIVE**

(57) Provided are an electrolyte additive and use thereof and a non-aqueous electrolyte including the additive. The electrolyte additive includes an unsaturated cyclic phosphate compound. The unsaturated cyclic phosphate compound is selected from at least one of compounds having a structure of Formula I; where R is respectively selected from a C1 to C5 linear or branched alkyl, a C1 to C10 linear or branched unsaturated hydrocarbyl (comprising an alkenyl, an alkynyl, or an aryl) or halogen-substituted C1 to C5 linear or branched alkyl.

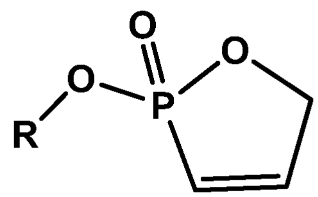

Formula I

EP 4 040 560 A1

## Description

### TECHNICAL FIELD

The present application belongs to the field of lithium-ion batteries and relates to an electrolyte additive for improving cycle performance and storage performance of lithium-ion batteries and use thereof, and a non-aqueous electrolyte including the additive.

### BACKGROUND

At present, energy shortage and environmental pollution have become worldwide problems, and in order to solve these problems, it is urgent to develop new energy vehicles to replace traditional fuel vehicles. In view of the advantages of lithium-ion batteries, such as high energy density, long life and environmental friendliness, in recent years, with the continuous reduction of production cost and the rapid development of related technologies, lithium-ion batteries have been more and more widely used in the field of new energy vehicles, and are considered as the most potential technology to replace traditional fuel vehicles at present.

During the initial charge of lithium-ion batteries, the electrolyte reacts with the negative electrode to form a solid electrolyte interphase (SEI) film, and such a SEI film has an important influence on the main electrical performance of lithium-ion batteries (such as cycle life, self-discharge and power, etc.). However, with the progress of charging and discharging, the SEI film may dissolve, decompose, break, recombine or thicken, which makes the battery performance gradually deteriorate; especially when the lithium-ion batteries are used at high temperature, the deterioration is greatly accelerated. Due to the demand for the battery energy density, the battery voltage becomes higher and higher. However, at high voltages, the positive active material is in a lithium-deficient state and thus has a strong oxidizing ability and can easily oxidizes and decomposes the electrolyte that is directly in contact with the positive active material, accompanied by the generation of a large amount of gas. In addition, the positive active material in an excessively lithium-deficient state is unstable and prone to some side reactions (such as oxygen release, phase transition, transition metal ion dissolution, etc.), resulting in the rapid deterioration of the performance of lithium-ion batteries. Meanwhile, the high temperature greatly accelerates the deterioration.

There are disadvantages of the existing art: when the lithium-ion batteries are used under extreme conditions (such as at high voltage/high temperature), the performance of the lithium-ion batteries deteriorates rapidly; meanwhile, under extreme conditions, the lithium-ion batteries is unstable internally and the safety performance of lithium-ion batteries is also greatly challenged. Therefore, it is an urgent need in the industry to solve the problems arising during the usage of lithium-ion batteries under extreme conditions. However, the development of an electrolyte with good protection for both positive and negative electrodes can effectively solve the above-mentioned problems when lithium-ion batteries are used under extreme conditions, bringing about great commercial and social benefits.

### SUMMARY

The present application aims to provide an electrolyte additive including an unsaturated cyclic phosphate compound, which is capable of simultaneously forming a passive film on the surface of positive and negative electrodes, and an electrolyte composed of the same. The electrolyte can form an interfacial film with good protective effect at the positive and negative electrode interfaces, thereby solving the main problems faced by the lithium-ion batteries when used under extreme conditions.

The technical schemes adopted in the present application are as follows.

The present application provides an electrolyte additive that comprises an unsaturated cyclic phosphate compound.

Optionally, the unsaturated cyclic phosphate compound is selected from at least one of compounds having a structure of Formula I:

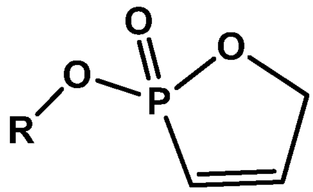

Formula I;

where R is respectively selected from a C1 to C5 linear or branched alkyl, a C1 to C10 linear or branched unsaturated hydrocarbyl (comprising an alkenyl, an alkynyl, or an aryl) or halogen-substituted C1 to C5 linear or branched alkyl.

Optionally, the unsaturated cyclic phosphate compound is selected from at least one of compounds having structures of Formula A1, A2, A3, and A4:

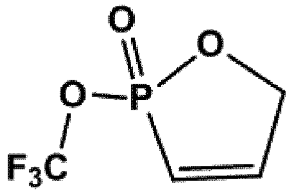

A1

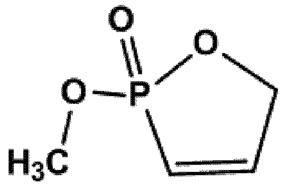

A2

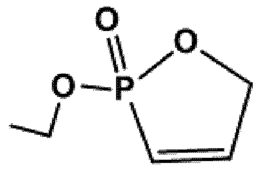

A3

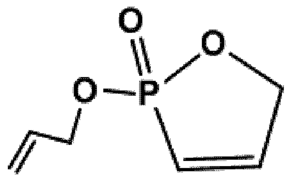

A4

Optionally, the electrolyte additive further comprises a film-forming additive; where the film-forming additive is one or at least two of vinylene carbonate (VC), fluoroethylene carbonate (FEC), 1,3-propane sultone (PS), prop-1-ene-1,3-sultone (PST), ethylene sulfate (DTD), lithium difluorophosphate ($LiPO_2F_2$), lithium bis(fluorosulfonyl)imide (LiFSI), and lithium difluoro(oxalato)borate (LiDFOB).

Optionally, the present application further provides use of the above-mentioned electrolyte additive in a lithium-ion battery electrolyte.

The present application provides a non-aqueous electrolyte that comprises the above-mentioned electrolyte additive, where the content of the unsaturated cyclic phosphate compound in the non-aqueous electrolyte is 0.3% to 1.8%. Optionally, the content is 0.8% to 1.3%.

The non-aqueous electrolyte further comprises a non-aqueous organic solvent and a lithium salt, where the content of each component in the non-aqueous electrolyte in percent by mass is: 0.3% to 1.8% of unsaturated cyclic phosphate compound, 0.1% to 10% of film-forming additive, 8% to 16% of electrolyte lithium salt, and the rest is the non-aqueous organic solvent.

Optionally, the electrolyte lithium salt is lithium hexafluorophosphate ($LiPF_6$).

Optionally, the non-aqueous organic solvent comprises a carbonate compound and/or a carboxylate compound having 1 to 4 carbon atoms, where the carbonate compound comprises cyclic carbonate and chain carbonate.

Optionally, the non-aqueous organic solvent is selected from one or more of ethylene carbonate (EC), propylene carbonate (PC), ethyl methyl carbonate (EMC), dimethyl carbonate (DMC), diethyl carbonate (DEC), ethyl propionate (EP), and propyl propionate (PP).

Optionally, the non-aqueous organic solvent is ethylene carbonate and ethyl methyl carbonate, and the mass ratio of the ethylene carbonate to the ethyl methyl carbonate is 3:7.

Optionally, the content of each film-forming additive in percent by mass in the electrolyte is 0.1% to 3%.

The present application further involves use of the above-mentioned electrolyte additive in a lithium-ion battery.

In the present application, the unsaturated cyclic phosphate compound having the structure of Formula I may be synthesized according to the following conventional route:

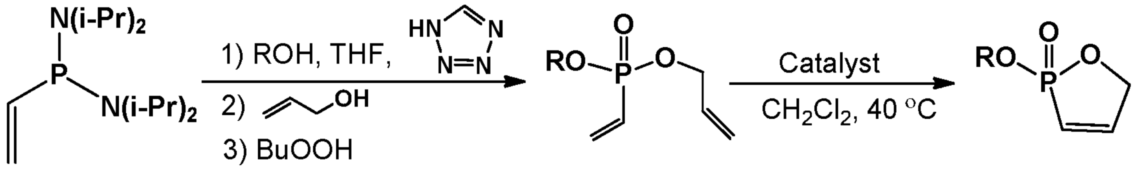


$R=CH_3-$, $CF_3-$, $CH_2=CHCH_2-$, $CH_3CH_2-$.

Preferably, the unsaturated cyclic phosphate compound is selected from at least one of compounds having structures of Formula A1, A2, A3, and A4, but is not limited thereto:

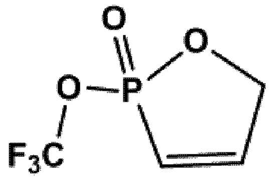

A1

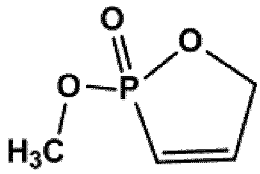

A2

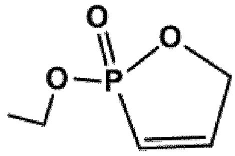

A3

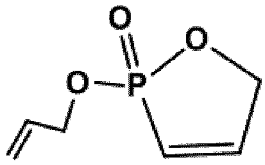

A4

The present application has the beneficial effects described below.

In the present application, through the non-aqueous electrolyte prepared by using an unsaturated cyclic phosphate compound as an additive component, a film can be respectively formed at the positive and negative electrode interfaces under the high cut-off voltage of 2.75 V to 4. 3 V in a lithium-ion battery prepared by using the non-aqueous electrolyte, which can effectively protect the positive and negative electrode interfaces.

The present application provides an electrolyte additive and an electrolyte using the additive, and the electrolyte can solve the main problems faced by the lithium-ion batteries when used under extreme conditions and significantly improve the high-temperature cycle performance and high-temperature storage performance of batteries.

DETAILED DESCRIPTION

The examples described below are intended to explain the present application in detail and not to limit the scope of the present application.

Unless otherwise defined, all technical terms used in the following examples have the same meanings as commonly understood by those skilled in the art to which the present application belongs. All the experimental reagents applied in the following examples are conventional biochemical reagents unless otherwise specified; experimental methods applied herein are conventional methods unless otherwise specified.

1. Preparation of non-aqueous electrolyte

Preparation of electrolyte: in a glove box filled with argon ($H_2O$ < 10 ppm, AR > 99.99%), ethylene carbonate (EC) and ethyl methyl carbonate (EMC) were mixed in a mass ratio of EC:EMC = 3:7, then 13.5% lithium hexafluorophosphate ($LiPF_6$) based on the total weight of the electrolyte was added, and then 1.2% VC based on the total weight of the electrolyte, 0.5% PS based on the total weight of the electrolyte, 0.8% $LiPO_2F_2$ based on the total weight of the

electrolyte, and 0.8% unsaturated cyclic phosphate compound A4 based on the total weight of the electrolyte were added, respectively, and mixed evenly to obtain the lithium-ion battery electrolyte of Example 1.

The Comparative Example and Examples 1 to 7 were the same as Example 1 except for the composition ratio of each additive component in the electrolyte shown in Table 1.

Table 1 Ratio of various electrolyte additive components in Comparative Example and Examples 1 to 7 (%: mass percentage)

| Scheme | Non-aqueous organic solvent | Lithium salt | Additive | |
|---|---|---|---|---|
| | | | Conventional film-forming additive | Five-membered heterocyclic phosphate compound |
| Comparative Example | EC:EMC = 3:7 | 13.5% $LiPF_6$ | 1.2% VC, 0.5% PS, 0.8% $LiPO_2F_2$ | / |
| Example 1 | | | | 0.8% A4 |
| Example 2 | | | | 0.3% A4 |
| Example 3 | | | | 1.3% A4 |
| Example 4 | | | | 1.8% A4 |
| Example 5 | | | | 0.8% A1 |
| Example 6 | | | | 0.8% A2 |
| Example 7 | | | | 0.8% A3 |
| Notes: 1. the sum of the mass percentages of various components in Table 1 is 100%, and the non-aqueous organic solution is the remaining amount apart from lithium salt and additives. | | | | |

2. Preparation of battery

The electrolytes described in Comparative Example and Examples 1 to 7 were respectively used for battery preparation and prepared into batteries for subsequent electrical performance test. The specific battery preparation method is as follows.

The batteries used in the examples and Comparative Example of the present application were pouch lithium-ion batteries, in which the positive electrode was ternary lithium nickel cobalt manganese oxide (NCM622) and the negative electrode was artificial graphite, with a capacity of 2.9 Ah and a cut-off voltage of 2.75 V to 4.3 V. The batteries to be injected with an electrolyte were prepared by homogenizing, coating, rolling, cutting, punching-shearing, stacking, packaging and baking, then the above-mentioned electrolytes were injected into the dried batteries respectively, and pouch lithium-ion batteries were prepared through the processes of pre-charging, aging, formation, degas, aging, grading and the like.

3. Electrical performance test

High temperature cycling and high temperature storage tests were carried out on the batteries prepared in Comparative Example and Examples 1 to 7, and the specific experimental methods were as follows.

1. High temperature cycling experiment: the prepared batteries were charged to 4.25 V at 1 C (2.9 A) at 45°C by constant-current constant-voltage charging with a constant current cut-off current of 0.05 C (0.145 A), and then discharged to 2.75 V at 1 C (2.9 A) by constant-current discharging, and then the charging and discharging were repeated in turn until the capacity retention of the batteries reached 80%.

Capacity retention (%) = discharge capacity at cycle cut-off/initial cycle discharge capacity × 100%

2. High temperature storage experiment: at 25°C, the prepared batteries were subjected to the charge-discharge cycle twice (at 1 C/1 C and 2.75 V to 4. 3 V), and the discharge capacity (Co) before storage was measured. Then the batteries were fully charged and stored at 55°C for 14 days, then the stored batteries were subjected to the

charge-discharge cycle twice (at 1 C/1 C and 2.75 V to 4. 3 V), and the discharge capacities of the two cycles (Ci and $C_2$, respectively) were measured.

$$\text{High temperature storage capacity retention} = C_1/C_0 \times 100\%$$

$$\text{High temperature storage capacity recovery} = C_2/C_0 \times 100\%$$

High temperature cycle and high temperature storage data of Comparative example and Examples 1 to 7 are shown in Table 2.

Table 2 High temperature cycle and high temperature storage data of Comparative Example and Examples 1 to 7

| Scheme | High temperature cycle duration (in weeks) | Storage at 55°C for 14 days | |
|---|---|---|---|
| | | Capacity retention | Capacity recovery |
| Comparative Example | 959 | 82.35% | 86.11% |
| Example 1 | 1588 | 91.79% | 95.02% |
| Example 2 | 1175 | 84.80% | 88.13% |
| Example 3 | 1612 | 91.68% | 94.82% |
| Example 4 | 1503 | 90.78% | 94.26% |
| Example 5 | 1526 | 90.51% | 93.84% |
| Example 6 | 1431 | 88.74% | 91.15% |
| Example 7 | 1447 | 87.38% | 91.67% |

As can be seen from the comparison between the electrical performance test results of Comparative Example and Examples 1, 5, 6 and 7, the addition of 0.8 wt% unsaturated cyclic phosphate compound as the additive in the electrolyte could obviously improve the high temperature cycle performance and high temperature storage performance of batteries, where the batteries including A4 had the best high temperature storage performance and high temperature cycle performance.

As can be seen from the comparison between the electrical performance test results of Examples 1 to 4, when the content of unsaturated cyclic phosphate compound A4 accounted for 0.3 wt% of the total mass of the electrolyte, a good protective film could be formed on the surface of positive and negative electrodes of batteries, and the high temperature cycle performance and high temperature storage performance of lithium-ion batteries could be improved; when the content of unsaturated cyclic phosphate compound A4 increased from 0.8 wt% to 1.3 wt%, the high temperature cycle performance and high temperature storage performance of batteries were not significantly improved; when the content of unsaturated cyclic phosphate compound A4 further increased to 1.8 wt%, the high temperature cycle performance and high temperature storage of batteries were degraded (it was presumed that the excessive addition of additives would lead to excessive film impedance of batteries). Therefore, A4 could function when it accounted for 0.3 wt% to 1.8 wt% of the total mass of the electrolyte and when used in power batteries, the content was optionally 0.8% to 1.3% of the total mass of the electrolyte.

As can be obviously seen from the above-mentioned results, the four unsaturated cyclic phosphate compounds could improve the high temperature storage performance and high temperature cycle performance of batteries under high voltage, and the best performance was achieved when the content of these unsaturated cyclic phosphate compounds accounted for 0.8 wt% of the electrolyte. The non-aqueous electrolyte could form films at the positive and negative electrode interfaces, which could effectively protect the positive and negative electrode interfaces, thereby solving the main problems faced by lithium-ion batteries when used under extreme conditions and significantly improving the high temperature cycle performance and high temperature storage performance of batteries.

The above are only preferred examples of the present application and not intended to limit the present application. The scope of the present application is defined by the appended claims.

**Claims**

1. An electrolyte additive, comprising an unsaturated cyclic phosphate compound.

2. The electrolyte additive according to claim 1, wherein the unsaturated cyclic phosphate compound is selected from at least one of compounds having a structure of Formula I:

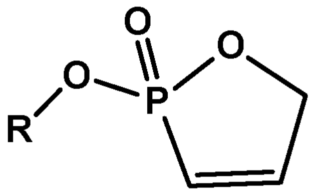

Formula I;

wherein R is respectively selected from a C1 to C5 linear or branched alkyl, a C1 to C10 linear or branched unsaturated hydrocarbyl (comprising an alkenyl, an alkynyl, or an aryl) or halogen-substituted C1 to C5 linear or branched alkyl.

3. The electrolyte additive according to claim 1, wherein the unsaturated cyclic phosphate compound is selected from at least one of compounds having structures of Formula A1, A2, A3, and A4:

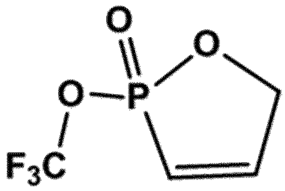

A1

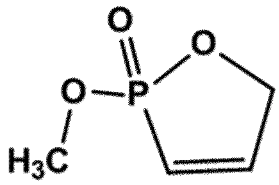

A2

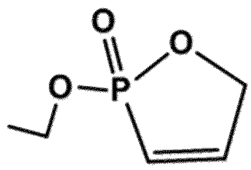

A3

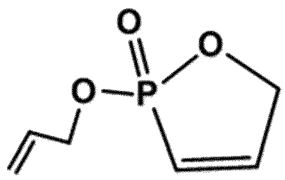

A4

4. The electrolyte additive according to any one of claims 1 to 3, further comprising a film-forming additive; wherein the film-forming additive is one or at least two of vinylene carbonate, fluoroethylene carbonate, 1,3-propane sultone, prop-1-ene-1,3-sultone, ethylene sulfate, lithium difluorophosphate, lithium bis(fluorosulfonyl)imide, and lithium difluoro(oxalato)borate.

5. Use of the electrolyte additive according to any one of claims 1 to 4 in a lithium-ion battery electrolyte.

6. A non-aqueous electrolyte, comprising the electrolyte additive according to any one of claims 1 to 4.

7. The non-aqueous electrolyte according to claim 6, wherein the content of the unsaturated cyclic phosphate compound in the non-aqueous electrolyte is 0.3% to 1.8%, optionally, 0.8% to 1.3%.

8. The non-aqueous electrolyte according to claim 6 or 7, further comprising a non-aqueous organic solvent and a lithium salt, wherein the content of each component in the non-aqueous electrolyte in percent by mass is: 0.3% to 1.8% of unsaturated cyclic phosphate compound, 0.1% to 10% of film-forming additive, 8% to 16% of electrolyte

lithium salt, and the rest is the non-aqueous organic solvent.

**9.** The non-aqueous electrolyte according to claim 8, wherein:

the electrolyte lithium salt is lithium hexafluorophosphate;
the non-aqueous organic solvent comprises a carbonate compound and/or a carboxylate compound having 1 to 4 carbon atoms, wherein the carbonate compound comprises cyclic carbonate and chain carbonate; optionally, the non-aqueous organic solvent is selected from one or more of ethylene carbonate, propylene carbonate, ethyl methyl carbonate, dimethyl carbonate, diethyl carbonate, ethyl propionate, and propyl propionate; optionally, the non-aqueous organic solvent is ethylene carbonate and ethyl methyl carbonate, and the mass ratio of the ethylene carbonate to the ethyl methyl carbonate is 3:7; and
the content of each film-forming additive in percent by mass in the electrolyte is 0.1% to 3%.

**10.** Use of the electrolyte additive according to any one of claims 1 to 4 in a lithium-ion battery.

**INTERNATIONAL SEARCH REPORT**

International application No. **PCT/CN2021/112377**

**A. CLASSIFICATION OF SUBJECT MATTER**

H01M 10/0567(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNKI, CNTXT, DWPI, SIPOABS, STN: 不饱和, 环, 磷酸酯, 乙烯基, unsaturated, cyclic, phosphate, vinyl

**C. DOCUMENTS CONSIDERED TO BE RELEVANT**

| Category* | Citation of document, with indication, where appropriate, of the relevant passages | Relevant to claim No. |
|---|---|---|
| PX | CN 112531210 A (TIANJIN EV ENERGIES CO., LTD.) 19 March 2021 (2021-03-19) description, paragraphs [0005]-[0028] | 1-10 |
| X | JP 2007250191 A (SONY CORP.) 27 September 2007 (2007-09-27) description, paragraphs [0006]-[0075] | 1-10 |
| X | JP 2011049153 A (MITSUBISHI CHEM CO LTD) 10 March 2011 (2011-03-10) description paragraphs [0010]-[0508] | 1-10 |
| A | CN 109273764 A (DONGGUAN SHANSHAN BATTERY MATERIALS CO., LTD. et al.) 25 January 2019 (2019-01-25) entire document | 1-10 |
| A | KR 20150128569 A (LG CHEMICAL LTD.) 18 November 2015 (2015-11-18) entire document | 1-10 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 October 2021** | **17 November 2021** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/112377**

| Patent document cited in search report | | | Publication date (day/month/year) | Patent family member(s) | | | Publication date (day/month/year) |
|---|---|---|---|---|---|---|---|
| CN | 112531210 | A | 19 March 2021 | None | | | |
| JP | 2007250191 | A | 27 September 2007 | None | | | |
| JP | 2011049153 | A | 10 March 2011 | None | | | |
| CN | 109273764 | A | 25 January 2019 | WO | 2020052118 | A1 | 19 March 2020 |
| KR | 20150128569 | A | 18 November 2015 | KR | 101675680 | B1 | 11 November 2016 |

Form PCT/ISA/210 (patent family annex) (January 2015)